# EUROPÄISCHE PATENTSCHRIFT

(11) **EP 0 754 621 B1**
(45) Veröffentlichungstag und Bekanntmachung des Hinweises auf die Patenterteilung: **01.03.2000**
(21) Anmeldenummer: 96108711.1
(22) Anmeldetag: 31.05.1996
(51) Int. Cl.: B64D 11/00

(54) **Vorrichtung zum Unterteilen einer Flugzeugkabine**
Device to divide an aircraft cabin
Dispositif pour partager une cabine d'avion

(30) Priorität: 20.07.1995 DE 19526525
(43) Veröffentlichungstag der Anmeldung: 22.01.1997
(73) Patentinhaber: DaimlerChrysler Aerospace Airbus Gesellschaft mit beschränkter Haftung, 21129 Hamburg (DE)
(72) Erfinder: Schumacher, Markus, 21614 Buxtehude (DE)
(74) Vertreter: Hansmann, Dierk, Dipl.-Ing.

(56) Entgegenhaltungen:
- DE-C- 4 119 623
- US-A- 4 185 799
- US-A- 5 165 626

## Beschreibung

Die Erfindung betrifft eine Flugzeugkabine mit einer Vorrichtung zum Unterteilen derselben, wobei die Vorrichtung sich quer zur Längsrichtung der Flugzeugkabine erstreckt und eine Trennwand aufweist, die mittels einer, an ortsfesten, längs der Flugzeugkabine angeordneten Führungsschienen gehalterten Trageinrichtung positionsveränderlich ist und die Trennwand aus mehreren, einzelnen Trennelementen besteht, wobei jedes Trennelement über zugeordnete Trageinrichtungen in mindestens einer Führungsschiene positionsveränderlich gehalten ist.

Derartige Vorrichtungen - sogenannte Class-Divider -, angeordnet zwischen Gruppen von Sitzen, werden verwendet, um im Bereich der Flugzeugkabine eine Unterteilung der Kabine für die unterschiedlichen Reiseklassen vorzunehmen. Darüber hinaus können derartige Vorrichtungen zur Trennung der Flugzeugkabine in Nichtraucher- und Raucherbereiche verwendet werden.
Da die Anzahl der benötigten Sitzplätze für die jeweilige Sitzgruppe oft erst unmittelbar vor Flugbeginn bekannt ist, erfordert eine wirtschaftlich günstige Auslastung des Flugzeuges eine Unterteilung der Kabine zwischen verschiedenen Sitzgruppen in kürzester Zeit mit einem geringen Arbeitsaufwand. Aus der US-A-5 165 626, die den nächstliegenden Stand der Technik bildet, ist eine Flugzeugkabine mit einem "Class-divider" bekannt, wobei dieser aus einem oberen und einem unteren Trennelement gebildet ist und über zugeordnete Trageinrichtungen in einer Führungsschiene gehalten wird. Die Trageinrichtungen können über längsverlaufende Schienen mittels üblicher Befestigungstechnik positionsveränderlich in der Flugzeugkabine befestigt werden. Es ist jedoch ein recht großer Zeit- und Montageaufwand notwendig, um die Trageinrichtungen zusammen mit den Trennelementen abzubauen und an einer anderen Position in der Flugzeugkabine wieder anzubauen.
Aus der DE-C-41 19 623 ist eine Vorrichtung zur Unterteilung von Flugzeugkabinen bekannt, die kurzfristig Positionsveränderungen vornehmen kann. Hierbei dienen ortsfeste Führungsschienen zur Führung der Vorrichtung zum Unterteilen, wobei die Führungsschienen im wesentlichen als Handläufe ausgebildet sind, die unterhalb der Gepäckablagen in einem gut zugänglichem Bereich angeordnet sind. Bei mehrmaligen Positionsveränderungen der als Trennelement ausgebildeten Vorrichtung tritt aber das Problem auf, daß infolge der Bewegung des Trennelementes mittels eines Laufwagens an den Handläufen Gleit-, Kratz- oder Schmierstoffspuren entstehen können. Das bedeutet eine wesentliche Beeinträchtigung des optischen Erscheinungsbildes der Kabine. So muß ein erhöhter Aufwand für die Reinigung der Handläufe in Kauf genommen werden, um Schmierstoffspuren zu beseitigen und es führt zu einem hohen Wartungsaufwand, wenn infolge der durch Kratzern beschädigten Innenaustattung Erneuerungen notwendig werden. Darüber hinaus ist durch die Verwendung der geschwungen ausgebildeten Montagebügel des Trennelementes im Bereich der zu öffnenden Gepäckablagen eine Verringerung des Durchgangsquerschnittes im Kopfbereich zu erwarten. Wenn diese Montagebügel dann durch einen Vorhang verdeckt sind, stellen sie außerdem ein verborgenes Hindernis und damit eine, insbesondere beim Ein- und Aussteigen der Passagiere bestehende potentielle Unfallquelle dar.

Demgemäß liegt der Erfindung die Aufgabe zugrunde, eine gattungsgemäße Flugzeugkabine so auszubilden, daß kurzfristig eine Unterteilung der Kabine in verschiedene Sitzgruppen (unterschiedliche Klassen) ermöglicht wird, um eine wirtschaftlich günstige Auslastung des Flugzeuges zu erreichen. Dabei sind schnelle Positionsveränderungen eines Class-Dividers zu ermöglichen, ohne daß das optische Erscheinungsbild der Flugzeugkabine wesentlich beeinträchtigt wird. Darüber hinaus ist zu gewährleisten, daß eine Anordnung von Ausstattungsteilen in der Flugzeugkabine vermieden wird, die den Durchgangsquerschnitt der Flugzeugkabine einschränkt und somit eine Unfallquelle für die Passagiere darstellt.

Diese Aufgabe wird bei einer gattungsgemäßen Flugzeugkabine dadurch gelöst, daß die Trageinrichtungen in den Führungsschienen verschiebbar sind und jede Führungsschiene im Bereich von Bauteilfugen zwischen Kabinenverkleidungselementen angeordnet ist.

Dabei ist insbesondere von Vorteil, daß kurzfristige Positionsveränderungen des Class-Dividers erreicht werden, wobei Gleit-, Kratz- oder Schmierstoffspuren an sichtbaren Ausstattungsteilen in der Kabine vermieden werden. Passagiere können sich nicht an Ausstattungsteilen der Flugzeugkabine verschmutzen. Der Montageaufwand für die Positionsveränderung des Class-Dividers ist minimiert und somit kann kurzfristig eine Unterteilung der Kabine erfolgen, um wirtschaftlich günstig das Flugzeug auszulasten. Darüber hinaus wird erreicht, daß der Durchgangsquerschnitt der Flugzeugkabine, insbesondere im Kopfbereich des Ganges, nicht eingeschränkt wird und somit für den Passagier potentielle Unfallgefahren vermieden werden.

Weiterbildungen und zweckmäßige Ausgestaltungen ergeben sich aus den Unteransprüchen 2 - 13.

Aus Anspruch 2 ergibt sich der Vorteil, daß mit der Anordnung von mehreren Trennelementen für verschiedene Kabinenkonfigurationen Variationsmöglichkeiten bestehen. So sind bei einer Flugzeugkabine mit einem Mittellängsgang und Sitzgruppen an jeder Fensterseite drei Trennelemente vorzusehen. Bei einer Flugzeugkabine mit zwei Längsgängen sind analog hierzu fünf Trennelemente vorzusehen.

Die Ausbildung gemäß Anspruch 3 und 5 bzw. 6 ermöglicht, daß der lichte Kabinenquerschnitt des Flugzeuges bei geöffneten Vorhängen nicht unnötig verkleinert wird und somit den Direct-View-Forderungen bei der Start- und Landephase gerecht wird.

Eine zuverlässige Halterung der Trennelemente ist mit der Ausbildung gemäß Anspruch 4 erreicht.

Die Ausbildung gemäß Anspruch 7 ermöglicht eine Sicherung gegen unbeabsichtigtes Verstellen der Trennelemente.

Mit der Ausgestaltung des Führungselementes als Rollwagen oder als Gleitschuh gemäß der Ansprüche 8 oder 9 ist eine leichte Verschieblichkeit der Trageinrichtung gewährleistet.

Die Maßnahme gemäß Anspruch 10 dient einer einfachen Handhabung bei der Montage und Demontage des als Rollwagen ausgebildeten Führungselementes in und aus der Führungsschiene. Darüber hinaus ist eine Verbesserung der Leichtgängigkeit des Führungselementes in der Führungsschiene erreicht.

Die Maßnahmen gemäß dem Anspruch 11 und 12 ermöglichen eine gleichzeitige Halterung von Trennelementen und Flugzeugverkleidungsteilen an der Führungsschiene, was insbesondere den Montageaufwand minimiert und eine solche Anordnung erlaubt, die die Führungschienen gegenüber den Passagieren verdeckt.

Mit der Ausführung gemäß Anspruch 13 wird eine insbesondere im Flugzeugbau angestrebte Leichtbauweise verwirklicht.

Die Erfindung wird nachstehend beschrieben, wobei die Vorrichtung anhand des in der Zeichnung dargestellten Ausführungsbeispieles näher erläutert ist.
Die Zeichnung zeigt
- in Fig. 1: eine perspektivische Darstellung einer Flugzeugkabine mit einer aus mehreren Trennelementen bestehenden Trennwand,
- in Fig. 2: eine perspektivische Darstellung einer Ausführungsform eines Sitzbereich-Trennelementes,
- in Fig. 3: eine perspektivische Darstellung einer Teilansicht eines Gangbereich-Trennelementes,
- in Fig. 4: eine Gangbereich-Trageinrichtung,
- in Fig. 5: ein Querschnitt durch ein Trennelement gemäß Blickrichtung V-V in Fig. 2 ,
- in Fign. 6, 7: eine vergrößerte perspektivische Darstellung eines Führungswagens mit korrespondierender Führungsschiene in Betriebsstellung und in Montagestellung und
- in Fig. 8: einen Querschnitt durch der im Bereich der Kabinenverkleidung angeordneten Führungsschiene, in der ein Führungswagen eingesetzt ist.

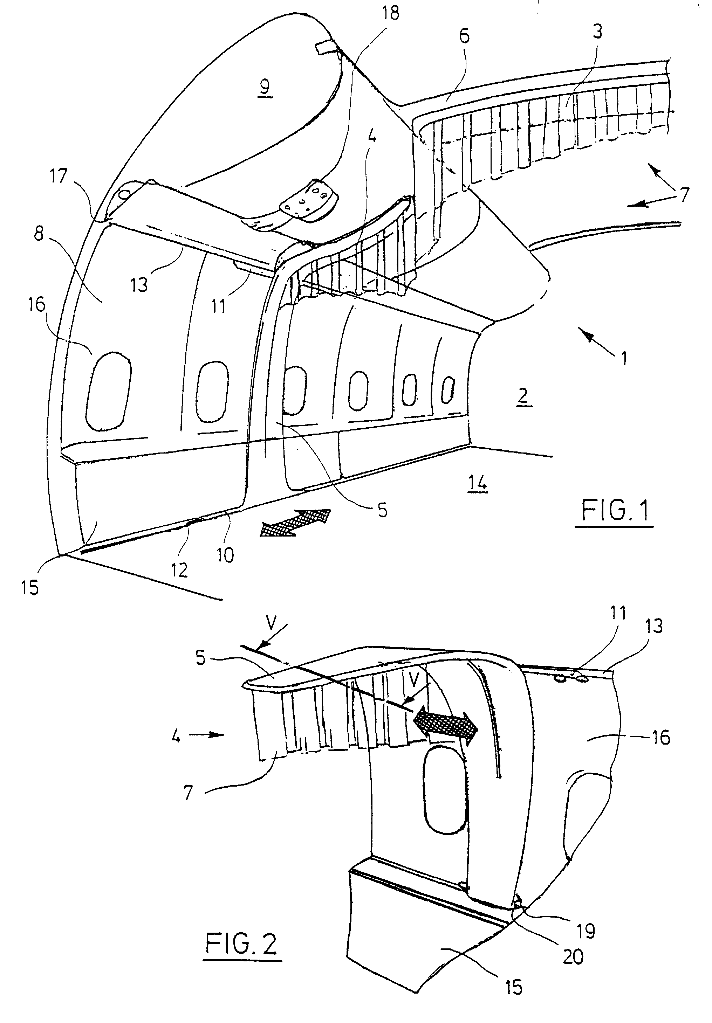

Die in Fig. 1 dargestellte Vorrichtung zum Unterteilen einer Flugzeugkabine 1 ist innerhalb einer Flugzeugkabine 2 angeordnet und erstreckt sich quer zur Längsrichtung der Flugzeugkabine 2. Somit kann die Flugzeugkabine 2 in verschiedene Bereiche, beispielsweise Nichtraucher- und Raucherbereiche oder verschiedene Klassen unterteilt werden. Die Vorrichtung zum Unterteilen einer Flugzeugkabine 1 ist als Trennwand 7 ausgebildet und besteht im wesentlichen aus mehreren, einzeln längsverschiebbaren Trennelementen 3, 4. So ist im Bereich des Ganges ein Gangbereich-Trennelement 3 und im Bereich der Sitze ein Sitzbereich-Trennelement 4 vorgesehen. In Fig. 1 ist nur eine Teilansicht einer Flugzeugkabine 2 dargestellt. Durch diese Aufteilung der Trennwand 7 in mehrere Trennelemente 3, 4 bestehen somit für verschiedene Kabinenkonfigurationen Variationsmöglichkeiten. Bei einer Flugzeugkabine 2 mit einem Gangbereich und Sitzgruppen an jeder Fensterseite sind drei Trennelemente vorzusehen, d. h. ein Gangbereich-Trennelement 3 und zwei Sitzbereich-Trennelemente 4, um den gesamten Kabinenquerschnitt blickdicht abzudecken. Längsverschiebbare Trageinrichtungen 5 und 6 sind vorgesehen, um das entsprechende Trennelement 3 oder 4 an der vorbestimmente Position innerhalb der Flugzeugkabine 2 zu halten. Die Trageinrichtungen 5 und 6 sind in zugeordneten Führungsschienen verschieblich. Sie weisen jeweils einen flachen Querschnitt auf und erstrecken sich jeweils quer zur Längsrichtung der Flugzeugkabine 2 und sind in ihrer Längsausdehnung der Querschnittsform der Flugzeugkabine im entsprechenden Sitz- bzw. Gangbereich angepaßt. So verringert sich der lichte Kabinenquerschnitt nicht durch unnötige Ausstattungsteile und insbesondere im Gangbereich wird eine ausreichende Bewegungsfreiheit der Passagiere erreicht und den Direct-View-Forderungen bei Start und Landung nachgekommen. Insbesondere ist für die Trageinrichtungen vorgesehen, sie aus Leichtbauverbundplatten herzustellen, die so geformt werden können, daß sie sich an die Verkleidungsteile bzw. den Gepäckablagenboden anschmiegen.
Die Sitzbereich-Trageinrichtung 5 ist als bogenförmiges Flachbauteil ausgebildet, deren unterer Bogen im Bereich der Kabinenseitenwand 8 und deren oberer Bogen unterhalb der Gepäckablagen 9 verläuft. Mittels Führungselementen 10, 11 ist der untere Bogen des Flachbauteils 5 in korrespondierenden Führungsschienen 12, 13 verschieblich fixiert. Die Führungsschienen 12, 13 sind ortsfest in der Flugzeugkabine 2 angeordnet und verlaufen im Bereich von Fugen von Kabinenverkleidungsteilen. Sie sind vorzugsweise an der Rumpfstruktur befestigt, um eine ausreichende Stabilität der Trageinrichtung 5 abzusichern. Die untere Führungsschiene 12 ist im Bereich zwischen Fußboden 14 und Fußraumverkleidung 15 angeordnet. Die obere Führungsschiene 13 ist vorteilhaft im Bereich zwischen der Fensterverkleidung 16 und der Seitenbeleuchtungsabdeckung 17 vorgesehen. Vorzugsweise sind die Führungsschienen 12, 13 durch die Kabinenverkleidungsteile so verdeckt, daß sie für einen Passagier nicht sichtbar sind, zumindest aber für Passagiere nicht zugänglich sind. Somit ist das optische Erscheinungsbild der Kabine nicht beeinträchtigt und die Passagiere werden sich nicht an Ausstattungsteilen, wie einem Handlauf, verschmutzen können.

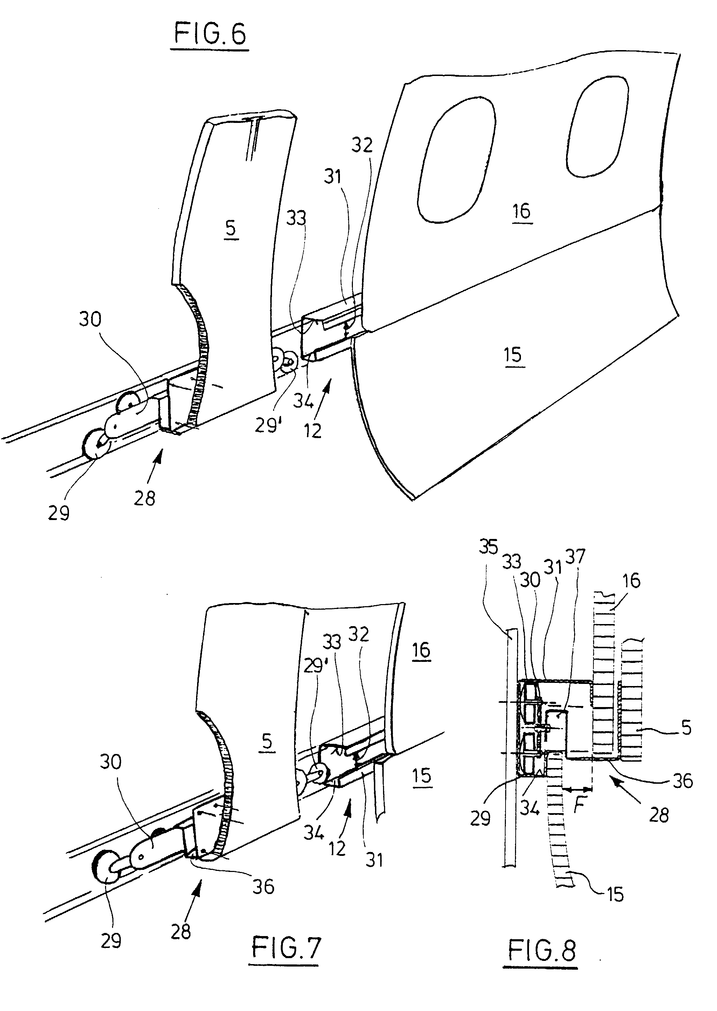

Die Führungselemente 10, 11 können gemäß einer Darstellung in den Fign. 6 bis 8 als Rollwagen ausgeführt sein, der in der Führungsschiene 12 geführt wird.
Es ist auch denkbar, daß nur die obere Führungschiene 13 zur Aufnahme von längsverschieblichen Rollwagen als Führungselement 11 vorgesehen ist und die untere Führungsschiene 12 lediglich als Gleitfläche 19 für einen Gleitschuh 20 ausgebildet ist, wie es in Fig. 2 dargestellt ist.
Weiterhin besteht die Möglichkeit, auch andere Ausstattungselemente, die innerhalb der Kabine längsverschieblich angeordnet sind, in derselben Führungsschiene zu führen.
Eine weitere, nicht gezeigte Ausführungsform ist denkbar, die eine automatisierte Bewegung der Trennelemente 3, 4 ohne manuelle Betätigung in den Führungsschienen ermöglicht. Dafür ist ein Antrieb, beispielsweise ein elektromotorischer Antrieb, am jeweiligen Rollwagen vorzusehen, der von einer Zentralstation aus gesteuert wird.

Aus den Fign. 1 und 2 ist weiterhin entnehmbar, daß der obere Bogen des Flachbauteils 5 nicht mit einer zusätzlichen Führungsschiene geführt wird. Das Flachbauteil 5 verläuft als freier Träger unterhalb des Bodens der Gepäckablage 9 in Richtung Kabinenmitte. Der "freie Träger" der Sitzbereich-Trageinrichtung 5 muß soweit reichen, daß im Bereich der Sitzreihe mittels der als Vorhang ausgebildeten Trennwand 7 eine vollständige Trennung der Kabine 2 erreicht wird. Da der obere Bogen der Trageinrichtung 5 als freier Träger ausgebildet ist, ist er in gewissem Maße in lotrechter Richtung nachgiebig. So ist es möglich, daß bei einer notwendigen Positionsveränderung der Trennelemente 3 und 4 ebenfalls unterhalb der Gepäckablage 9 angeordnete Ausstattungselemente, wie Versorgungseinheiten 18 übergangen werden können bzw. bei einer Abwärtsbewegung einer Klappe der Gepäckablage 9 der "freie Träger" nachgibt und nach Schließen der Gepäckklappe wieder in die Ausgangsposition zurückkehrt.

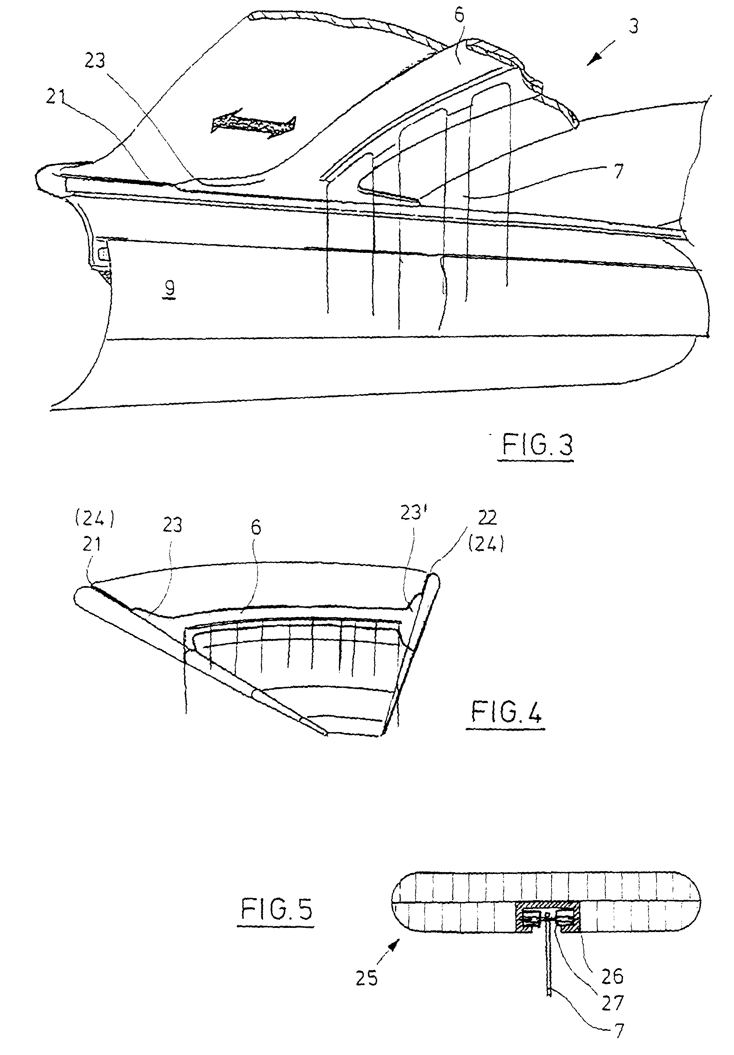

In den Fign. 3 und 4 ist das Gangbereich-Trennelement 3 mit Trageinrichtung 6 und Vorhang 7 dargestellt.
Die Gangbereich-Trageinrichtung 6 ist ebenfalls als Flachbauteil, vorteilhaft als Leichtbauverbundplatte ausgeführt, die der Deckenkontur der Flugzeugkabine 2 angepaßt ist. Die Trageinrichtung 6 erstreckt sich über den gesamten Gang, um eine blickdichte Anordnung des Vorhanges 7 in diesem Bereich zu ermöglichen. Beim Öffnen einer Klappe der Gepäckablage 9 im Bereich des Gangbereich-Trennelementes 3 wird dabei der Vorhang 7 beiseite geschoben. Zusätzliche Trageinrichtungen für den Vorhang 7, die den Öffnungsbereich der Klappen der Gepäckablagen 9 aussparen, sind nicht mehr notwendig.
In einer Ausführungsform ist - wie in Fig. 4 gezeigt - die Gangbereich-Trageinrichtung 6 mit zwei Führungselementen 23 und 23' versehen, die in einer linken und einer rechten Deckenführungsschiene 21, 22 geführt sind. Die linke und rechte Deckenführungsschiene 21 bzw. 22 sind im Bereich einer Fuge 24 bzw. 24' zwischen Deckenverkleidungselementen oder Deckenverkleidungselementen und Lichtabdeckelementen angeordnet. Vorzugsweise besteht zwischen Deckenführungsschiene 21 bzw. 22 und der Rumpfstruktur eine Verbindung, um eine ausreichende Stabilität der Trageinrichtung 6 zu ermöglichen. Ebenfalls zu diesem Zweck werden die als Rollwagen ausgebildeten Führungselemente 23 und 23' ausreichend lang gestaltet. Damit wird die Gefahr eines Verkantens der Trageinrichtung 6 in den Deckenführungschienen 21 bzw. 22 vermindert. Die Trageinrichtung 6 ist im Bereich des Übergangs von Führungselement 23 bzw. 23' zum Tragkörper 6 verbreitert, um das Führungselement aus optischen Gründen abzudecken.
Zur Veranschaulichung des Aufbaus einer als Flachbauteil ausgeführten Trageinrichtung 5 oder 6 ist in Fig. 5 ein Querschnitt durch das Trennelement 3 gemäß Blickrichtung V-V der Fig. 2 dargestellt. Um eine flache Bauweise zu erreichen, die trotzdem den hohen Festigkeitsanforderungen und einer Leichtbauweise genügt, ist Leichtbauverbundmaterial mit einem Füllstoff in Wabenbauweise 25 für die Trageinrichtung anwendbar. Fig. 5 zeigt eine zweilagige Ausführung, in der eine Vorhangschiene 26 eingebracht ist. Die Vorhangschiene 26 kann aus üblichen Aluminiumprofilen bestehen, die in die Leichtbauverbundplatte eingeklebt ist und ebenso geformt werden kann, wie das an die Kontur der Flugzeugkabine 2 angeschmiegte Flachbauteil. Der Vorhang 7 kann über Rollelemente 27 innerhalb der Vorhangschiene 26 bewegt werden und so durch Beiseiteschieben den Direct-View während der Start- und Landephase des Flugzeuges ermöglichen.

In den Fign. 6 und 7 ist eine vergrößerte perspektivische Darstellung einer Führungsschiene 12 in der ein Rollwagen 28 eingesetzt ist in Betriebsstellung und in Montagestellung ersichtlich. Die Führungschiene 12 ist hinter Verkleidungsteilen 15, 16 angeordnet und ist somit für einen Passagier nicht sichtbar. Der Rollwagen 28 besteht im wesentlichen aus zwei Rollenpaaren 29, 29', die über einen Verbindungssteg 30 miteinander verbunden sind. Die Rollenpaare 29, 29' sind an den Enden des Verbindungssteges 30 drehbar befestigt und können für die in Fig. 7 gezeigte Montagestellung horizontal gestellt werden, damit ein Herausnehmen der Trageinrichtung 5 aus der Führungsschiene 12 ermöglicht wird. Der Abstand der Rollenpaare 29, 29' ist ausreichend groß gewählt, um die Trageinrichtung 5 gegen ein Verkanten abzusichern.
Die Führungsschiene 12 ist in der gezeigten Ausbildung als Hohlprofil, vorzugsweise als offenes Vierkantprofil 31 ausgebildet, deren Zugangsbereich 32 zum Innenraum des Profils 31 so gewählt ist, daß die Rollenpaare 29, 29' in der horizontalen Montagestellung ohne Probleme aus dem Innenraum der Profilschiene 31 entnommen werden können. Der Innenraum des Profils 31 weist Ablaufflächen 33, 34 für die am Rollenwagen 28 vorgesehenen Rollenpaare 29, 29' auf.

In Fig. 8 ist ein Querschnitt durch der im Bereich der Kabinenverkleidung angeordneten Profilschiene 31 mit eingesetztem Rollenwagen 28 gezeigt. Die Profilschiene 31 ist an der Rumpfstruktur 35 befestigt, um eine ortsfeste und stabile Lage zu ermöglichen. Gleichzeitig dient die Profilschiene 31 als Befestigung für Ausstattungsteile innerhalb der Flugzeugkabine 2. So ist am unteren Steg des Vierkantprofils 31 die Fußraumverkleidung 15 angeordnet. Am oberen Steg des Vierkantprofils 31 ist die Fensterverkleidung 16 befestigt. Zwischen Fensterverkleidung 16 und Fußraumverkleidung 15 entsteht eine Fuge F, die zugleich für den Rollenwagen 28 ausreichend Platz bietet, an der Prolfilschiene 31 entlangzurollen. Der Rollwagen 28 besteht im wesentlichen aus den schon genannten Rollenpaaren 29, 29' mit dazwischenliegendem Verbindungssteg 30 und aus einer Halteschiene 36. Die Halteschiene 36 stellt die Verbindung zur Trageinrichtung 5 her. Die in Leichtbauweise ausgeführte Trageinrichtung 5 ist mit üblichen Mitteln an der Halteschiene 36 befestigt. Die Halteschiene 36 ist im wesentlichen u-förmig ausgebildet, wobei eine Aussparung 37 für die Fußraumverkleidung 15 an der Halteschiene 36 vorgesehen ist. Mit bekannten Arretiermitteln (nicht gezeigt) kann der Rollwagen 28 auf der Profilschiene 31 in einer vorbestimmten Position arretiert und wieder gelöst werden. So ist eine einfache Handhabung und Einstellung der Trennelemente bei einer Positionsveränderung möglich.

### Bezugszeichenliste

- 1: - Vorrichtung zum Unterteilen
- 2: - Flugzeugkabine
- 3: - Gangbereich-Trennelement
- 4: - Sitzbereich-Trennelement
- 5: - Trageinrichtung - Sitzbereich
- 6: - " - Gangbereich
- 7: - Trennwand (Vorhang)
- 8: - Kabinenseitenwand
- 9: - Gepäckablage
- 10: - Führungselemente an 5
- 11: - " an 5
- 12: - untere Führungsschiene
- 13: - obere Führungsschiene
- 14: - Fußboden
- 15: - Fußraumverkleidung
- 16: - Fensterverkleidung
- 17: - Seitenbeleuchtungsabdeckung
- 18: - Versorgungseinheit
- 19: - Gleitfläche
- 20: - Gleitschuh
- 21: - linke Deckenführungsschiene
- 22: - rechte "
- 23, 23': - Führungselemente an 6
- 24, 24': - Deckenverkleidungsfuge
- 25: - Leichtbauverbundplatte mit Füllstoff in Wabenbauweise
- 26: - Vorhangschiene
- 27: - Rollelemente
- 28: - Rollwagen (Führungswagen)
- 29, 29': - Rollenpaare
- 30: - Verbindungssteg
- 31: - offenes Vierkantprofil, Profilschiene
- 32: - Zugangsbereich
- 33: - Ablaufflächen
- 34: - "
- 35: - Rumpfstruktur
- 36: - Halteschiene
- 37: - Aussparung

## Patentansprüche

1. Flugzeugkabine (2) mit einer Vorrichtung zum Unterteilen (1) derselben, wobei die Vorrichtung (1) sich quer zur Längsrichtung der Flugzeugkabine (2) erstreckt und eine Trennwand (7) aufweist, die mittels einer, an ortsfesten, längs der Flugzeugkabine (2) angeordneten Führungsschienen (12, 13; 21, 22) gehalterten Trageinrichtung (5, 6) positionsveränderlich ist und die Trennwand (7) aus mehreren, einzelnen Trennelementen (3, 4) besteht, wobei jedes Trennelement (3, 4) über zugeordnete Trageinrichtungen (5, 6) in mindestens einer Führungsschiene (12, 13; 21, 22) positionsveränderlich gehalten ist, **dadurch gekennzeichnet, daß** die Trageinrichtungen (5,6) in den Führungsschienen (12, 13; 21, 22) verschiebbar sind und jede Führungsschiene (12, 13; 21, 22) im Bereich von Bauteilfugen (F; 24, 24') zwischen Kabinenverkleidungselementen angeordnet ist.

2. Flugzeugkabine nach Anspruch 1,
**dadurch gekennzeichnet, daß**
die Trennwand (7) aus mindestens einem Trennelement (3) im Gangbereich und mindestens einem Trennelement (4) im Sitzbereich besteht.

3. Flugzeugkabine nach einem der Ansprüche 1 oder 2,
**dadurch gekennzeichnet, daß**
die Trageinrichtung (5, 6) der Kontur der Flugzeugkabine (2) im Sitz- oder Gangbereich nachgebildet ist.

4. Flugzeugkabine nach einem der Ansprüche 1 bis 3,
**dadurch gekennzeichnet, daß**
die Trageinrichtung (5, 6) mit Führungselementen (10, 11; 23, 23') versehen ist, die mit den zugeordneten Führungsschienen (12, 13; 21, 22) korrespondieren.

5. Flugzeugkabine nach einem der Ansprüche 1 bis 4,
**dadurch gekennzeichnet, daß**
die Trageinrichtung (5) im Sitzbereich als bogenförmiges Flachbauteil ausgebildet ist, deren unterer Bogen im Bereich der Kabinenseitenwand (8) fixiert ist und deren oberer Bogen unterhalb der Gepäckablagen (9) verläuft und als freier Träger in gewissem Maße in lotrechter Richtung nachgiebig ist.

6. Flugzeugkabine nach einem der Ansprüche 1 bis 5,
**dadurch gekennzeichnet, daß**
die Trageinrichtung (6) im Gangbereich als ein der Deckenkontur der Flugzeugkabine (2) angepaßtes Flachbauteil ausgebildet ist, welches in mindestens einer, im Bereich einer Fuge (24, 24') der Deckenverkleidung angeordneten Führungsschiene (21, 22) fixiert ist.

7. Flugzeugkabine nach einem der Ansprüche 1 bis 6,
**dadurch gekennzeichnet, daß**
das Führungselement (10, 11; 23, 23') mit Arretiermitteln versehen ist.

8. Flugzeugkabine nach einem der Ansprüche 1 bis 7,
**dadurch gekennzeichnet, daß**
das Führungselement (10, 11; 23, 23') als Rollwagen (28) ausgebildet ist.

9. Flugzeugkabine nach einem der Ansprüche 1 bis 7,
**dadurch gekennzeichnet, daß**
das Führungselement (10, 11; 23, 23') als Gleitschuh (20) ausgebildet ist.

10. Flugzeugkabine nach einem der Ansprüche 1 bis 9,
**dadurch gekennzeichnet, daß**
die Führungsschiene (12, 13; 21, 22) als Hohlprofilschiene (31) ausgebildet ist, die mit einen Zugangsbereich (32) zum Innenraum und der Innenraum mit Ablaufflächen (33, 34) versehen ist.

11. Flugzeugkabine nach einem der Ansprüche 1 bis 10,
**dadurch gekennzeichnet, daß**
die Führungschiene (12, 13; 21, 22) mit Befestigungsmitteln für Flugzeugverkleidungsteile (15, 16) versehen ist.

12. Flugzeugkabine nach einem der Ansprüche 1 bis 11,
**dadurch gekennzeichnet, daß**
die Führungschiene (12, 13; 21, 22) in mindestens einer in Kabinenlängsrichtung verlaufende Kabinenverkleidungsteilfuge (F) angeordnet ist, wobei Kabinenverkleidungsteile (15, 16) zumindest die Fuge aus Sichtrichtung der Passagiere verdecken.

13. Flugzeugkabine nach einem der Ansprüche 1 bis 12,
**dadurch gekennzeichnet, daß**
die Trageinrichtung (5, 6) im wesentlichen als Leichtbauverbundplatte ausgeführt ist.

## Claims

1. Aircraft cabin (2) with a partitioning apparatus (1) for said cabin, wherein the apparatus (1) extends at right angles to the longitudinal direction of the aircraft cabin (2) and comprises a partition wall (7), which is variable in position by means of a supporting device (5, 6) mounted on stationary guide rails (12, 13; 21, 22) disposed along the aircraft cabin (2), and the partition wall (7) comprises a plurality of individual partition elements (3, 4), wherein each partition element (3, 4) is held by associated supporting devices (5, 6) in at least one guide rail (12, 13; 21, 22) so as to be variable in position, **characterized in that** the supporting devices (5, 6) are displaceable in the guide rails (12, 13; 21, 22) and each guide rail (12, 13; 21, 22) is disposed in the region of structural element joints (F; 24, 24') between cabin trim elements.

2. Aircraft cabin according to claim 1,
**characterized in that**
the partition wall (7) comprises at least one partition element (3) in the aisle region and at least one partition element (4) in the seat region.

3. Aircraft cabin according to one of claims 1 or 2,
**characterized in that**
the supporting device (5, 6) is adapted to the contour of the aircraft cabin (2) in the seat or aisle region.

4. Aircraft cabin according to one of claims 1 to 3,
**characterized in that**
the supporting device (5, 6) is provided with guide elements (10, 11; 23, 23'), which correspond with the associated guide rails (12, 13; 21, 22).

5. Aircraft cabin according to one of claims 1 to 4,
**characterized in that**
the supporting device (5) in the seat region takes the form of a curved flat component, of which the lower curve is fixed in the region of the cabin side wall (8) and the upper curve extends below the luggage compartments (9) and as a free support is vertically compliant to a certain extent.

6. Aircraft cabin according to one of claims 1 to 5,
**characterized in that**
the supporting device (6) in the aisle region takes the form of a flat component, which is adapted to the ceiling contour of the aircraft cabin (2) and fixed in at least one guide rail (21, 22), which is disposed in the region of a joint (24, 24') of the ceiling trim.

7. Aircraft cabin according to one of claims 1 to 6,
**characterized in that**
the guide element (10, 11; 23, 23') is provided with arresting means.

8. Aircraft cabin according to one of claims 1 to 7,
**characterized in that**
the guide element (10, 11; 23, 23') takes the form of a rolling carriage (28).

9. Aircraft cabin according to one of claims 1 to 7,
**characterized in that**
the guide element (10, 11; 23, 23') takes the form of a sliding block (20).

10. Aircraft cabin according to one of claims 1 to 9,
**characterized in that**
the guide rail (12, 13; 21, 22) takes the form of a hollow section rail (31) provided with an access region (32) to the interior and the interior is provided with run-off surfaces (33, 34).

11. Aircraft cabin according to one of claims 1 to 10,
**characterized in that**
the guide rail (12, 13; 21, 22) is provided with fastening means for aircraft trim elements (15, 16).

12. Aircraft cabin according to one of claims 1 to 11,
**characterized in that**
the guide rail (12, 13; 21, 22) is disposed in at least one cabin trim element joint (F) extending in cabin longitudinal direction, wherein cabin trim elements (15, 16) at least conceal the joint from the view of the passengers.

13. Aircraft cabin according to one of claims 1 to 12,
**characterized in that**
the supporting device (5, 6) substantially takes the form of a lightweight laminated panel.

## Revendications

1. Cabine d'avion (2) équipée d'un dispositif (1) pour subdiviser celle-ci, dans laquelle le dispositif (1) s'étend transversalement à la direction longitudinale de la cabine d'avion (2) et présente une cloison (7), dont la position peut être modifiée au moyen d'un agencement de support (5, 6) monté sur des rails de guidage fixes (12, 13; 21, 22) agencés le long de la cabine d'avion (2) et qui est constituée de plusieurs éléments de séparation individuels (3, 4), chaque élément de séparation (3, 4) étant monté de manière à pouvoir changer de position dans au moins un rail de guidage (12, 13; 21, 22) par l'entremise de dispositifs de support correspondants (5, 6), caractérisée en ce que les agencements de support (5, 6) peuvent coulisser dans les rails de guidage (12, 13; 21, 22) et en ce que chaque rail de guidage (12, 13; 21, 22) est agencé dans la zone de joints d'éléments structurels (F; 24, 24') entre des éléments d'habillage de la cabine.

2. Cabine d'avion selon la revendication 1, caractérisée en ce que la cloison (7) est constituée d'au moins un élément de séparation (3) dans la zone du couloir et d'au moins un élément de séparation (4) dans la zone des sièges.

3. Cabine d'avion selon l'une quelconque des revendications 1 et 2, caractérisée en ce que l'agencement de support (5, 6) suit le contour de la cabine d'avion (2) dans la zone des sièges ou dans la zone du couloir.

4. Cabine d'avion selon l'une quelconque des revendications 1 à 3, caractérisée en ce que l'agencement de support (5, 6) est équipé d'éléments de guidage (10, 11; 23, 23') qui correspondent aux rails de guidage correspondants (12, 13; 21, 22).

5. Cabine d'avion selon l'une quelconque des revendications 1 à 4, caractérisée en ce que l'agencement de support (5) se présente dans la zone des sièges sous la forme d'un élément structurel incurvé dont l'arc interne est fixé dans la zone de la paroi latérale (8) de la cabine et dont l'arc externe s'étend en dessous des porte-bagages (9) et est flexible sous la forme d'un support libre dans une certaine mesure dans la direction verticale.

6. Cabine d'avion selon l'une quelconque des revendications 1 à 5, caractérisée en ce que l'agencement de support (6) se présente dans la zone du couloir sous la forme d'un élément structurel plat adapté au contour du plafond de la cabine d'avion (2), ledit élément structurel étant fixé dans au moins un rail de guidage (21, 22) agencé dans la zone d'un joint (24, 24') de l'habillage du plafond.

7. Cabine d'avion selon l'une quelconque des revendications 1 à 6, caractérisée en ce que l'élément de guidage (10, 11; 23, 23') est équipé de moyens d'arrêt.

8. Cabine d'avion selon l'une quelconque des revendications 1 à 7, caractérisée en ce que l'élément de guidage (10, 11; 23, 23') se présente sous la forme d'un chariot roulant (28).

9. Cabine d'avion selon l'une quelconque des revendications 1 à 7, caractérisée en ce que l'élément de guidage (10, 11; 23, 23') se présente sous la forme d'un patin de guidage (20).

10. Cabine d'avion selon l'une quelconque des revendications 1 à 9, caractérisée en ce que le rail de guidage (12, 13; 21, 22) se présente sous la forme d'un rail profilé creux (31) qui est équipé d'une zone d'accès à l'espace intérieur et l'espace intérieur est équipé de surfaces de roulement (33, 34).

11. Cabine d'avion selon l'une quelconque des revendications 1 à 10, caractérisée en ce que le rail de guidage (12, 13; 21, 22) est équipé de moyens de fixation pour des parties d'habillage (15, 16) de l'avion.

12. Cabine d'avion selon l'une quelconque des revendications 1 à 11, caractérisée en ce que le rail de guidage (12, 13; 21, 22) est agencé dans au moins un joint (F) de parties d'habillage de la cabine s'étendant dans la direction longitudinale de la cabine, des parties d'habillage (15, 16) de la cabine dissimulant au moins le joint à la vue des passagers.

13. Cabine d'avion selon l'une quelconque des revendications 1 à 12, caractérisée en ce que l'agencement de support (5, 6) se présente en substance sous la forme d'une plaque composite de structure légère.
